# EUROPÄISCHE PATENTANMELDUNG

(11) **EP 1 095 924 A2**
(43) Veröffentlichungstag der Anmeldung: **02.05.2001**
(21) Anmeldenummer: 00810827.6
(22) Anmeldetag: 14.09.2000
(51) Int. Cl.: C05F 17/00, C05F 17/02, B09B 3/00

(54) **Vergärungsverfahren und Anlage zum Vergären**

(30) Priorität: 26.10.1999 CH 195099
(71) Anmelder: Walter Schmid AG, 8152 Glattbrugg (CH)
(72) Erfinder: Schmid, Walter, 8152 Opfikon (CH)
(74) Vertreter: Patentanwaltsbüro Feldmann AG

(57) **Zusammenfassung**

Es wird ein Verfahren und eine Vorrichtung zum anaeroben Abbau von biogenen Abfallstoffen vorgeschlagen, wobei die zu vergärenden Abfallstoffe vor dem Einspeisen in einen Fermenter nicht mit rezirkuliertem Impfmaterial angeimpft werden, sondern sämtliches vergorene Material nach der Entnahme aus dem Fermenter entwässert wird, und das Impfmaterial frei von Rezirkulat ist und nur bei der Entwässerung anfallendes Presswasser umfasst.

## Beschreibung

Die vorliegende Erfindung betrifft ein Verfahren zum Vergären von organischen Abfällen und eine Vorrichtung zum Durchführen dieses Verfahrens.

Für die kommerzielle Verwertung von biogenen Haus-, Garten-, Landwirtschafts- und Industrieabfällen hat sich in zunehmendem Masse die anaerobe Umsetzung etabliert. Die anaeroben Verfahren haben sich sowohl in der Massen- als auch in der Energiebilanz als den aeroben Verfahren überlegen erwiesen. Im Vergleich zu aeroben Kompostierverfahren bedingt der Bau einer anaeroben Vergärungsanlage, vor allem des geschlossenen Fermenters, hohe Investitionskosten und auch der Betrieb einer solchen Anlage ist kostenintensiv. Diese Kosten werden jedoch durch wesentliche Vorteile der Vergärungsanlagen mehr als aufgewogen. Die Vergärungsanlagen können auf einem relativ kleinen Areal erstellt und betreiben werden. Der geschlossene Gärreaktor erlaubt einen im wesentlichen geruchsneutralen Betrieb der Anlage, so dass auch Standorte in dicht besiedelten Gegenden in Frage kommen.

Im Gegensatz zu den aeroben Verfahren können in den Fermentern auch Abfälle mit sehr feuchten Anteilen problemlos vergoren werden. Da in den geschlossenen Fermentern praktisch kein Sauerstoff als Elektronenakzeptor beim Abbau des organischen Materials zur Verfügung steht, werden die vorhandenen Biopolymere nur teilweise zu CO₂ mineralisiert und es entsteht als gewünschtes energiereiches Produkt Methangas. Der meso- oder thermophile Betrieb einer Vergärungsanlage stellt zudem sicher, dass das nach Durchlaufen des Gärreaktors zurückbleibende Gärprodukt hygienisch und nicht mehr mit unerwünschten Keimen belastet ist.

Während bei bekannten Flüssig-Gärverfahren die biogenen Abfälle mit grossen Mengen Wasser angemaischt werden, sind von der Anmelderin seit Jahren Anlagen in Betrieb, die mit Gärgut mit einem hohen Anteil von Trockensubstanz arbeiten. Solche Anlagen sind aus der EP-B-0'476'217 und der EP-B-0'621'336 der Anmelderin bekannt und weltweit im Einsatz. Der Hauptvorteil des hohen Trockensubstanzgehaltes (TS-Gehalts) des Gärgutes liegt im geringeren Volumen, das behandelt werden muss, und damit in den geringeren Kosten für die kleiner dimensionierte Anlage und den günstigeren Betrieb der Anlage. Insbesondere wird durch den hohen TS-Gehalt das Volumen an anfallenden, biologisch stark belasteten, Abwässern reduziert.

In den bekannten Anlagen wird dem zu vergärenden Frischmaterial vor oder beim Einführen in den Fermenter bereits vergorenes Material, oder Rezirkulat, zugegeben um einen Animpfeffekt zu erreichen. In der Regel liegt der Rezirkulatanteil am in den Fermenter eingebrachten Material bei 15 bis 25 %. Bis zu einem Viertel des Reaktorvolumens wird also von Material eingenommen, das den Fermenter bereits einmal durchlaufen hat und damit energetisch minderwertig ist und nur noch dazu dient, das zu vergärende Frischgut mit Mikroorganismen anzuimpfen. Das Rezirkulat enthält nicht nur anorganisches und organisches Inertmaterial (Sand, Steine, Tannenzapfen, Knochen etc.) das nicht mehr oder, wie zum Beispiel im Fall von Lignocellulosen, nur langsam und unvollständig abgebaut werden können, sondern auch, wie im weiteren ausgeführt wird, hemmende und sogar toxische Substanzen. Durch das wiederholte Rezirkulieren dieser ungewünschten Substanzen kommt es zu einer Anreicherung oder Aufkonzentrierung im Fermenter.

Könnte auf dieses Impfmaterial verzichtet werden oder sein Volumen reduziert werden, so liesse sich bei gleichem Frischgutdurchsatz das Anlagenvolumen deutlich reduzieren, respektive bei gleichem Fermentervolumen der Frischgutdurchsatz deutlich erhöhen.

Die Mikrobiologie und die Energetik von anaeroben Abbauprozessen ist sehr komplex. In einem oben beschriebenen Fermenter laufen eine Reihe von verschiedenen Abbauschritten ab, an denen jeweils verschiedene Bakteriengruppen beteiligt sind. Diese Bakteriengruppen oder Gesellschaften sind energetisch und stoffwechsel-physiologisch sehr eng miteinander verbunden. Während fermentative Bakterien die ersten Schritte der Umsetzung der Biopolymere, nämlich die Hydrolyse und die Fermentation bewerkstelligen wird die Acetogenese und die anschliessende Methanogenese von acetogenen, respektive methanogenen Bakterien gebildet. Das komplexe Wechselspiel der syntroph gekoppelten Mischkulturen kann sowohl durch von den Bakterien ausgeschiedene Stoffwechselprodukte, wie auch durch von aussen eingetragene hemmende oder toxische Substanzen negativ beeinflusst werden. Schon bei der anfänglichen Fermentation werden Wasserstoff und Essigsäure gebildet, die sich beide ab gewissen Konzentrationen negativ auf die Methangärung auswirken können. Das Biomaterial mit dem der Fermenter beschickt wird variiert je nach Jahreszeit oder Abfalllieferanten stark. Verfahrensparameter wie TS-Gehalt und pH-Wert des Gärgutes können zwar eingangsseitig kontrolliert und eingestellt werden, jedoch ist es mit vertretbarem Aufwand nicht möglich hemmende oder toxische Substanzen zu entfernen oder zu neutralisieren. Besonders unerfreulich ist es, dass unter ungünstigen Umständen solche hemmende oder toxische Substanzen aus dem Impfmaterial stammen können. Ist zum Beispiel im Fermenter die Methanogenese durch Hemmstoffe oder durch konkurrenzierende sulfatreduzierende Bakterien gestört, so enthält das vergorene Material, wie es aus dem Fermenter ausgetragen wird, eben jene Hemmstoffe oder unerwünschten Bakterien und nach dem Animpfen beginnt der Abbauprozess am eintragsseitigen Ende des Fermenters schon unter suboptimalen Bedingungen. Zwar kann, wie bereits erwähnt, der pH-Wert optimiert werden, d.h. die direkten negativen Auswirkungen von zum Beispiel H₂S, Essigsäure, Fettsäuren oder Ammoniak werden abgemildert, aber eine mangelhafte Pufferkapazität des Mediums kann zum Beispiel nicht ausgeglichen werden. Eine Manipulation wie zum Beispiel das Senken des pH-Werts im Rezirkulat ist zudem recht aufwendig, da es sich beim bekannten Rezirkulat um eine inhomogene Masse mit einem hohen Anteil an Faser- und Feststoffen handelt. Das Rezirkulat ist zwar in der Regel pumpfähig, um jedoch eine ausreichende Durchmischung mit zum Beispiel den pH-Wert einstellenden Lösungen zu erhalten müssen zusätzliche mechanische Mischeinrichtungen genutzt werden. Bei einer intensiven Durchmischung können die Bakterienkulturen geschädigt werden. Die Betreiber von Vergärungsanlagen stehen oft vor dem Problem, dass sie bei einem, in Hinblick auf die Methangewinnung optimierten, Betrieb nur einen ungenügenden biologischen Abbau des zugeführten Materials erreichen. Andererseits sinkt bei einem Anlagenbetrieb, der auf einen höchstmöglichen Abbau zielt die tägliche Methanproduktion pro Reaktorvolumen oft auf ein inakzeptables Mass. Ueblicherweise wird daher ein Kompromiss zwischen diesen beiden Zielen eingegangen und das Gärmaterial bleibt länger im Reaktor als es für eine optimale Gasproduktion nötig wäre, ist aber auch noch nicht annähernd vollständig abgebaut, wenn es den Fermenter verlässt. Bei den bekannten, im Pfropfenstrom betriebenen, Fermentern stellt das am Fermenterende austretende Gärgut also meistens nicht das optimale Impfgut dar, da der Fermenterbetrieb nicht auf dieses Kriterium hin optimiert werden kann.

Bevor das vergorene Material, das nicht als Impfmaterial Verwendung findet, der Nachrotte zugeführt werden kann, wird es bei den bekannten Anlagen über Rohrleitungen zu nachgeschalteten Entwässerungsstufen gefördert. In solchen Entwässerungsstufen wird dem Nass-Gärprodukt ein Grossteil des Wassers entzogen. Erst dieses entwässerte Gärprodukt ist für die aerobe Nachrotte geeignet, die der anaeroben Vergärung im Fermenter folgen muss, um qualitativ hochwertiges Kompostmaterial zu erhalten. Damit die Nachrotte tatsächlich aerob stattfindet, darf das entwässerte Digestat nicht zu feucht sein.

Der Flüssigkeitsanteil, der dem Nass-Gärprodukt in der Entwässerungsstufe entzogen wird, soll im folgenden Presswasser genannt werden. Dies unabhängig davon, ob die Flüssigkeit tatsächlich durch aktives Pressen, oder nur durch passives Abtropfen vom nassen Digestat abgetrennt wurde. Es ist offensichtlich, dass das Presswasser einen relativ hohen Gehalt organischem Material aufweisen kann, und oftmals dickflüssig und schlammartig ist.

Es ist bekannt einen Teil des Presswassers bei Bedarf zum Befeuchten in den Fermenter zurückzuführen oder über die Nachrotte zu sprühen. Die Entsorgung des verbleibenden Presswassers stellt vor allem auf Grund der hohen Belastung mit organischem Material ein grosses Problem für die Betreiber der Vergärungsanlagen dar. Zur Reinigung des Presswassers sind von der Anmelderin und anderen Firmen verschiedenste Verfahren bekannt.

Es ist die Aufgabe der vorliegenden Erfindung ein Verfahren zur Vergärung von biogenen Abfällen und eine Vergärungsanlage zur Verfügung zu stellen, welche die oben genannten Nachteile nicht aufweist.

Diese Aufgabe lösen ein Verfahren mit den Merkmalen des Patentanspruches 1 und eine Vorrichtung mit den Merkmalen des Patentanspruches 8.

In der beiliegenden Zeichnung sind bevorzugte Ausführungsbeispiele der erfindungsgemässen Vorrichtung dargestellt, die in der nachfolgenden Beschreibung in Zusammenhang mit dem erfindungsgemässen Verfahren erläutert werden.

Es zeigen
- Figur 1: eine schematische Darstellung der Einbindung der erfindungsgemässen Mischstrecke in der Fermentieranlage und
- Figur 2: die Mischstrecke für sich allein in der Seitenansicht in einem grösseren Massstab.

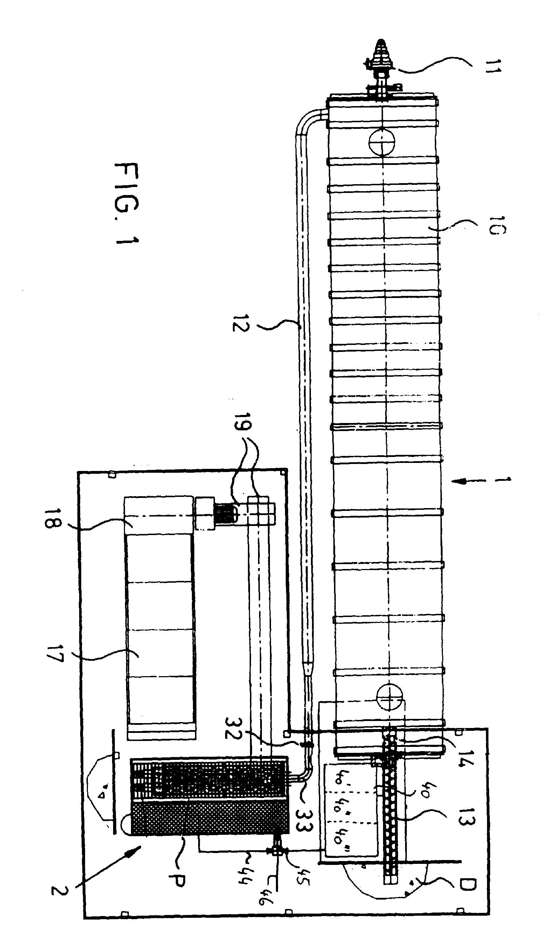

Anhand der Figur 1 werden die Anteile der Anlage zum Fermentieren von biogenen Abfällen erläutert, die für die Erfindung von Bedeutung sind. Der eigentliche Fermenter oder Gärreaktor ist gesamthaft mit 1 bezeichnet. Dieser besteht zur Hauptsache aus dem Fermentertank 10, der entweder als Stahlkonstruktion oder als ausgekleidete Betonkonstruktion gestaltet sein kann. Der Fermentertank 10 kann axial durch ein Rührwerk durchsetzt sein, welches von einem Rührwerkantrieb 11 getrieben ist. Der Rührwerkantrieb 11 befindet sich an jenem Ende des Fermentertankes 10, in den das abzubauende Gut eingespeist wird. Die Einspeisung erfolgt über die vorzugsweise beheizbare Speiseleitung 12. Die Speiseleitung 12 steht mit einer Mischstrecke 2 in Verbindung. Von der Mischstrecke 2 wird entsprechend aufbereitetes Material durch die Speiseleitung 12 dem Fermentertank 10 zugeführt.

Die Zuführung erfolgt kontinuierlich beziehungsweise quasi kontinuierlich und bestimmt die Durchlaufzeit des zu fermentierenden Materials durch den Fermenter. Der Durchlauf durch den Fermenter erfolgt folglich ebenfalls kontinuierlich oder quasi kontinuierlich. Von der an der Unterseite des Fermenters liegenden Austragsöffnung 14 gelangt das vergorene Material, das nasse Gärprodukt oder Gärgut, in eine Austragsvorrichtung 13, die hier als kombinierte Austrags- und Entwässerungsvorrichtung gestaltet ist. Das weitgehend entwässerte Digestat D kann anschliessend einer Nachrotte zugeführt werden. Das mittels der kombinierten Austrags-Entwässerungsvorrichtung 13 gewonnene Presswasser wird in einen Presswassertank 40 aufgenommen. Vom Tank 40 kann Presswasser über Zuleitung 44 mittels einer Regulier- und Pumpvorrichtung 45 in die noch zu beschreibende Mischstrecke 2 geführt werden. Bei Bedarf kann über eine Leitung 46 zusätzliches Verdünnungswasser, zum Beispiel in der Anlage anfallendes Brauchwasser oder Frischwasser, aus hier nicht dargestellten Tanks oder Leitungsnetzen zugegeben werden.

Das zerkleinerte Frischmaterial gelangt im dargestellten Ausführungsbeispiel vom Dosierförderer 17 mit Austragseinheit 18 über Förderbänder 19 zur Mischstrecke 2. Ueblicherweise muss das angelieferte Frischgut zerkleinert werden, bevor es dem Fermenter zugeführt werden kann. Dazu können Zerkleinerer eingesetzt werden, die hier nicht dargestellt sind. Statt das Biomaterial auf eine geeignete Grösse zu zerkleinern kann es auch durch Sieben, zum Beispiel in einem Trommelsieb, von zu grossen Bestandteilen befreit werden.

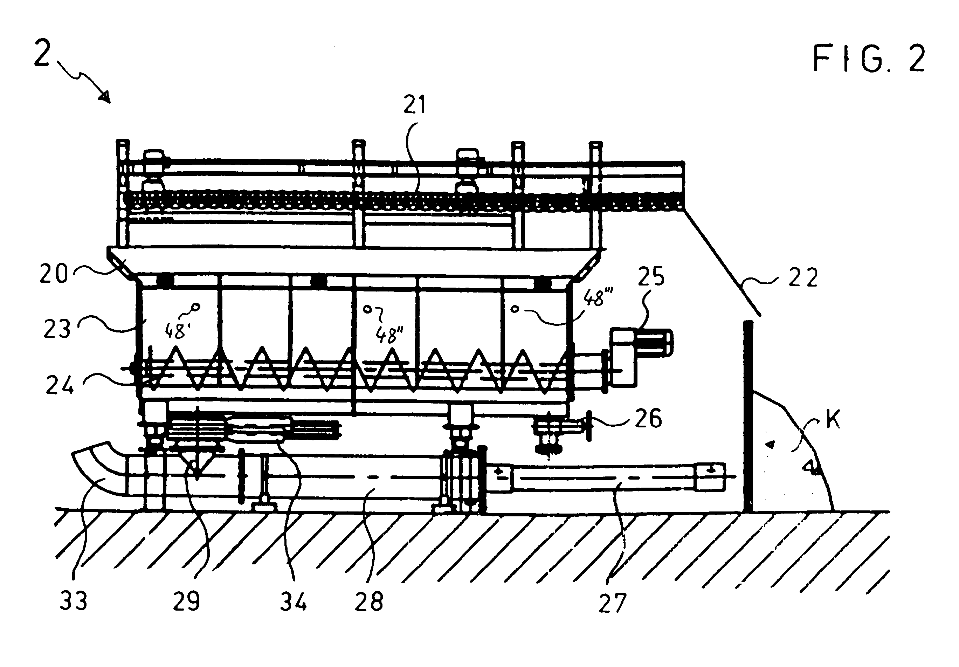

In der Figur 2 ist eine vorteilhafte Ausführungsform der Mischstrecke 2 in einer Seitenansicht vereinfacht dargestellt. Mit 20 ist die Einfüllöffnung bezeichnet. Darüber befindet sich ein Scheibensieb 21. Seitlich ist eine Podestfläche P für das Bedienungspersonal angeordnet. Die Podestfläche ist in der Figur 1 ersichtlich. Das Sieb 21 kann unterschiedlich gestaltet sein. Anstelle eines Scheibensiebes kann auch ein Sternsieb, ein Trommelsieb oder ein Spannwellensieb eingesetzt werden. Wie bereits vorgängig erwähnt, ist das Sieb nur nötig, wenn das zugeführte Material Grobgut und Fremdkörper enthält, die nicht in den Fermenter eingespeist werden können oder sollen. Diese Grobteile die nicht durch das Sieb 21 hindurch passen, gelangen über den Siebüberlauf 22 mit einer entsprechenden Rutsche auf eine Kippe K, von der sie abgeführt werden können.

Durch die Einfüllöffnung 20 gelangt das zerkleinerte und gesiebte Frischgut in eine Mischkammer 23. Im unteren Bereich der Mischkammer 23 sind beispielsweise zwei parallele Schnecken 24 angeordnet, die beide gleich- oder entgegengerichtet antreibbar sind. Hierzu dienen die Antriebsmotoren 25. In die Mischkammer 23 kann über eine oder mehrere Presswasserdüsen 48', 48'', 48''' Presswasser aus der Presswasserleitung 44 eingeleitet werden, wie aus Figur 1 ersichtlich ist. Um schon beim Zugeben des Presswassers einen gewissen Verteilungseffekt zu erreichen, sind mehrere Presswasserdüsen 48', 48'', 48''', wie in der Figur 2 angedeutet, seitlich entlang der Innenwand der Mischkammer angeordnet. Eine oder mehrere Düsen können aber auch entlang einer Mittellinie unter dem Einfülltrichter 20 positioniert sein. Das Presswasser dient neben der Einstellung eines gewünschten Trockensubstanzgehaltes und der gewünschten Homogenität des zu vergärenden Frischgutes gemäss des erfindungsgemässen Verfahrens als alleiniges Animpfmaterial für das zu vergärende Frischmaterial.

Unterhalb der Mischkammer 23 befindet sich ein Förderzylinder 28, der mit Hilfe eines Hydraulikzylinders 27 bidirektional arbeiten kann. Der Förderzylinder 28 steht über einen Verbindungsstutzen 29 mit der Mischkammer 23 in Verbindung. Am Verbindungsstutzen 29 ist ein Schieber 34 angeordnet, der es erlaubt die kommunizierende Verbindung zwischen Mischkammer 23 und Förderzylinder 28 zu öffnen und zu schliessen. Die Speisevorrichtung 2 steht über eine Verbindungsleitung 33 der Speiseleitung 12 in kommunizierender Verbindung. Die Speiseleitung 12 lässt sich mittels eines Schiebers 32 öffnen und schliessen.

Wie in der schematischen Darstellung der Figur 1 gezeigt ist, wird im erfindungsgemässen Verfahren kein Rezirkulat mehr zum Animpfen des Frischgutes vor dem Eintrag in den Fermenter verwendet. Das aus dem Fermenter 10 ausgetragene Nass-Gärgut kann direkt und vollständig der Entwässerung zugeführt werden, da kein Rezirkulat dem Frischgut beigegeben wird. Das Animpfen erfolgt ausschliesslich mit dem aus der Entwässerungsstufe 13 erhaltenen Presswasser. Das Presswasser wird vorteilhafterweise im Presswassertank 40 unterhalb der Entwässerungseinheit 13 zwischengespeichert. Wie bereits erwähnt wird im einfachsten Fall wird die Presswasserzugabe beim Animpfen in Abhängigkeit vom Trockensubstanzgehalt des Frischgutes geregelt. Dem Frischgut wird soviel Presswasser zugegeben, bis ein gewünschtes Gemisch erreicht ist, das mit hohem Trockensubstanzanteil gerade noch pumpfähig ist. Im Gegensatz zum bekannten Animpfen mit Rezirkulat, kann das Presswasser als Impfmittel wesentlich einfacher gehandhabt werden. Es ist gut pumpfähig und kann beim Mischen relativ fein dosiert und verteilt werden.

Für den Vergärungsprozess wichtige physikalische und chemische Parameter des Presswassers, wie zum Beispiel TS-Gehalt, Temperatur, pH-Wert, Pufferkapazität, Gehalt an freien und undissoziierten Säuren etc., können problemlos ermittelt werden. Im Presswasser liegen verschiedene organische und anorganische Stoffe und Partikel in Lösung und in Suspension vor. Durch Zugabe von geeigneten Hilfsstoffen (als Lösung oder in löslicher Form) kann die Zusammensetzung des Presswassers optimiert werden. Durch Zugabe von Säuren oder Basen (in Lösung oder deren Salzen) lässt sich ein gewünschter pH-Wert einstellen. Bei Bedarf können Puffer zugegeben werden und damit die Pufferkapazität von Presswasser und Frischgutgemisch erhöht werden. Als weitere Zuschlagstoffe können dem Presswasser kritische Nährstoffe oder Spurenelemente zugegeben werden, um die Wachstumsbedingungen für die Mikroorganismen zu verbessern. Unerwünschte Hemmstoffe oder Toxine können durch Zugabe von Fällungmitteln oder Komplexbildnern ausgefällt oder gebunden und damit neutralisiert werden.
Das Presswasser kann, bevor es dem Frischmaterial zugegeben wird, bei Bedarf bis zu mehrere Tage lang belüftet werden, um unerwünschte Substanzen oxidativ abzubauen. Der oxidative Abbau kann durch Zugabe von Oxidationsmitteln noch unterstützt werden.
Auch lassen sich dem Presswasser Starterkulturen einiger oder aller am Abbauprozess beteiligten fermentativen, acetogenen und methanogenen Bakteriengruppen zugeben. Beispiele für die beteiligten bekannter Bakteriengruppen sind aus der einschlägigen Fachliteratur bekannt. So können zum Beispiel verschieden *Clostridium* Arten als Fermentierer dienen, als Acetogene kommen zum Beispiel *Syntrophomonas wolfei* oder *Syntrophus buswellii* in Frage. Die Essigsäure aus der fermentativen und der acetogenen Phase kann wiederum von acetoclastischen *(Methanosarcina spec., Methanosaeta spec.)* oder hydrogenolytischen Methanbakterien zu Methan umgesetzt werden.

Es hat sich als vorteilhaft erwiesen den Presswassertank 40 in mehrere Kompartimente 40', 40'', 40''' einzuteilen, oder mehrere separate Tanks beim Aufbereiten des Presswassers einzusetzen. So kann zum Beispiel ein Teil des Presswassers in einem Kompartiment 40'' mittels geeigneter Einrichtungen gerührt und belüftet werden, während ein weiter Teil schon oxidativ vorbehandelter Teil des Presswassers im Kompartiment 40''' vor der Abgabe an die Mischstrecke 2 temperiert wird und pH-Wert und Pufferkapazität eingestellt werden. Die Kompartimente 40', 40'', 40''' sind vorzugsweise untereinander über Leitungssysteme miteinander verbunden. Die verschiedenen Kompartimente können mit verschiedenen Zusatzeinrichtungen wie Filtern, Heiz- und Rührwerken, Sensoren, Belüftungsvorrichtungen und Vorrichtungen zur automatischen Probenentnahme versehen sein. Ein solcher Presswassertank 40 stellt also nicht nur einen Tank dar, sondern vielmehr eine Vorrichtung zum Konditionieren des Presswassers. Ist es aus anlagentechnischen oder rein aus Platzgründen ungünstig die Anlage zur Presswasserbehandlung 40 direkt an oder unter der Entwässerungsanlage anzuordnen, so können einzelne Kompartimente 40', 40'', 40''' oder die gesamte Anlage 40 auch entfernt davon positioniert werden, da sich das Presswasser problemlos pumpen lässt.
Liegt das Presswasser in der gewünschten Qualität vor, so kann es zum Animpfen des Frischmaterials verwendet werden.
Nachfolgend sei die Wirkungsweise der Mischstrecke 2 kurz beschrieben. Während Schieber 34 geschlossen ist, wird die Mischkammer 23 durch die Einfüllöffnung 20 bis zu einem gewünschten Füllgrad beschickt. Die beiden Schnecken 24 arbeiten während dieser Zeit im Mischbetrieb und vermengen das eingefüllte Frischmaterial. Gleichzeitig oder anschliessend wird über die Düsen 48 Presswasser in die Mischkammer 23 eingeleitet und intensiv mit dem Frischmaterial vermengt und bis zu einem gewissen Grad homogenisiert. Das angeimpfte Frischmaterial ist nun bereit dem Fermenter zugeführt zu werden.
Nun kann der Schieber 34 im Verbindungsstutzen 29 geöffnet, und durch Zurückziehen des Kolbens im Förderzylinder 28 mittels Hydraulikzylinder 27 das mit Presswasser vermischte Frischgut über den Verbindungsstutzen 29 aus der Mischkammer 23 in den Förderzylinder 28 gesaugt werden, bis der Kolben des Förderzylinders 28 eine hintere Position erreicht. Von den beiden Schnecken 24 kann das Material vorgängig schon in einen Bereich über dem Verbindungsstutzen gefördert worden sein. Anschliessend wird der Schieber im Verbindungsstutzen 29 geschlossen und das Frischgut wird bei geöffnetem Schieber 32 vom sich vorwärtsbewegenden Kolben des Förderzylinders 28 über Verbindungsleitung 33 in die Speiseleitung 12 geschoben. Der Schieber 32 kann nun geschlossen werden und es kann eine weitere Portion Frischmaterial angesaugt werden.
Wahlweise kann nun in einem weiteren Pumpzyklus Frischmaterial in den Förderzylinder 28 eingesaugt und anschliessend der Speiseleitung 12 zugeführt werden.

Da das Presswasser ein Verfahrensgut darstellt, das sich ungleich leichter handhaben und behandeln lässt, als das bisher als Impfmaterial verwendete Nass-Gärprodukt oder Rezirkulat, sind die Investitionskosten in eine erfindungsgemässe Anlage gegenüber einer herkömmlichen Anlage wesentlich tiefer. Beim Animpfen mit Rezirkulat müssen Volumina und Leistung von Leitungen und Pumpensystemen ungleich grösser dimensioniert sein.

Versuche an einem bestehenden Fermenter bei dem das Presswasser vor der Verwendung zum Animpfen belüftet wurde haben verbesserte Resultate in Bezug auf Abbaugeschwindigkeit und Abbaugrad des aus dem Fermenter austretenden Materials ergeben.

Ein weiterer wesentlicher Vorteil der alleinigen Verwendung von Presswasser zum Animpfen des zu vergärenden Frischmaterials liegt in der verbesserten Ausnutzung des Fermentervolumens. Bei bekannten Fermentern mit hohem Trockensubstanzanteil weist das Fermentationsprodukt einen TS-Gehalt von bis zu 35% auf. Gerade im Frühjahr und im Spätherbst ist der organisch nicht verwertbare Anteil der Trockensubstanz sehr hoch. Es ist offensichtlich, dass dieses inerte Material nach dem Animpfen Reaktorvolumen belegt, ohne zum fermentativen Abbau oder der Gaserzeugung beizutragen. Durch das Animpfen nur mit Presswasser kann das Volumen an eingesetztem Impfmaterial reduziert werden, und bei gleichem Frischgutdurchsatz lässt sich das Anlagenvolumen deutlich reduzieren, respektive bei gleichem Fermentervolumen der Frischgutdurchsatz deutlich erhöhen. Zusätzlich kann auf die grossvolumigen Leitungen und die zugehörigen Pumpeinrichtungen, die bisher das Rezirkulat dem Frischgut zugeführt haben, verzichtet werden.

Soll bei Frischmaterial mit niedrigem TS-Gehalt der Flüssigkeitszusatz beim Animpfen niedrig gehalten werden, so können fast alle der Hilfs- und Zuschlagsstoffe dem Presswasser als Feststoffe zugegeben und darin gelöst werden.

## Patentansprüche

1. Verfahren zum anaeroben Abbau von biogenen Abfallstoffen, wobei die zu vergärenden Abfallstoffe vor dem Einspeisen in einen Fermenter mit Impfmaterial angeimpft werden und das vergorene Material nach der Entnahme aus dem Fermenter entwässert wird, dadurch gekennzeichnet, dass das Impfmaterial frei von Rezirkulat ist und nur bei der Entwässerung anfallendes Presswasser umfasst.

2. Verfahren nach Anspruch 1, dadurch gekennzeichnet, dass das Presswasser nach dem Entwässerungsschritt in einem Presswassertank zwischengelagert wird.

3. Verfahren nach Anspruch 1, dadurch gekennzeichnet, dass das zerkleinerte zu vergärende Frischmaterial vor dem Einspeisen in den Fermenter mit dem Presswasser vermischt wird.

4. Verfahren nach Anspruch 1, dadurch gekennzeichnet, dass das Presswasser belüftet wird, um den oxidativen Abbau von hemmenden oder toxischen Stoffe zu fördern.

5. Verfahren nach Anspruch 1, dadurch gekennzeichnet, dass einer oder mehrere Parameter aus der Gruppe:
- pH-Wert
- Pufferkapazität
- H₂S-Gehalt
- Ammonium- oder NH₃-Gehalt
- Gehalt an Fettsäuren
- Gehalt an kurzkettigen Carbonsäuren
des Presswassers bestimmt und auf einen gewünschten Wert eingestellt wird.

6. Verfahren nach Anspruch 1, dadurch gekennzeichnet, dass dem Presswasser folgende Hilfs- oder Zusatzstoffe allein oder im Gemisch beigegeben werden:
- Säure
- Lauge
- Puffer
- Mikronährelemente oder Spurenelemente
- Makronährelemente.

7. Verfahren nach Anspruch 1, dadurch gekennzeichnet, dass dem Presswasser Starterkulturen folgender Bakteriengruppen einzeln oder als Gemisch zugegeben werden:
- fermentative Bakterien
- acetogene Bakterien
- methanogene Bakterien.

8. Anlage (1) zum Vergären von biogenen Abfallstoffen welche mindestens einen Fermenter (10), mindestens eine Entwässerungsanlage (13) zum Entwässern des aus dem Fermenter (10) stammenden Nass-Gärgutes und mindestens eine Mischvorrichtung zum Vermischen des zu vergärenden Frischmaterials und mindestens eine Speisevorrichtung zum einspeisen des zu vergärenden Materials in einen Fermenter (10) und mindestens eine Vorrichtung zum Animpfen des zu vergärenden Materials mit aus dem Fermenter stammendem Impfgut umfasst, dadurch gekennzeichnet, dass die Mischvorrichtung und die Vorrichtung zum Animpfen zu einer Mischstrecke (2) zusammengefasst sind, der Presswasser über eine Presswasserzuleitung (44) und Frischmaterial zugeführt werden und dass das in der Mischstrecke hergestellte Gemisch aus Presswasser und zu vergärendem Frischmaterial mittels der Speisevorrichtung (12, 28) dem Fermenter (10) zugeführt wird.

9. Anlage gemäss Anspruch 8, dadurch gekennzeichnet, dass der Presswassertank (40) mindestens zwei Kompartimente (40', 40'', 40''') umfasst.

10. Anlage gemäss Anspruch 9, dadurch gekennzeichnet, dass die Kompartimente (40', 40'', 40''') mit Heiz- und/oder Rühr- und/oder Belüftungseinrichtungen versehen sind.
